# EUROPEAN PATENT SPECIFICATION

(11) **EP 3 308 905 B1**
(45) Date of publication and mention of the grant of the patent: **24.05.2023**
(21) Application number: 17195887.9
(22) Date of filing: 11.10.2017
(51) Int. Cl.: B23Q 7/04, B23Q 7/10, B23Q 7/00

(54) **LOADING DEVICE AND MACHINING DEVICE**
LADEVORRICHTUNG UND BEARBEITUNGSVORRICHTUNG
DISPOSITIF DE CHARGEMENT ET DISPOSITIF D'USINAGE

(30) Priority: 12.10.2016 JP 2016200805
(43) Date of publication of application: 18.04.2018
(60) Divisional application: 22170448.9
(73) Proprietor: Roland DG Corporation, Shizuoka 431-2103 (JP)
(72) Inventor: HANAJIMA, Shingo, Hamamatsu-shi Shizuoka 431-2103 (JP); SAKATA, Yuji, Hamamatsu-shi Shizuoka 431-2103 (JP)
(74) Representative: Grünecker Patent- und Rechtsanwälte PartG mbB

(56) References cited:
- EP-A1- 1 604 775
- EP-A1- 1 982 799
- DE-A1- 3 706 122
- DE-A1-102009 011 672
- DE-C1- 4 116 091

## Description

### Technical field

The present invention relates to loading devices for loading workpieces into a holder in a machining device unit and machining devices having the same.

### Background art

U.S. Patent No. 9,242,327 discloses a machining device that loads each workpiece among a plurality of workpieces into a main unit and machines the workpiece with a tool of the main unit. Reference numerals used in U.S. Patent No. 9,242,327 are denoted in parentheses, and the technique described in this patent is described briefly.

A spindle (20) movable along a Z-axis in the vertical direction is provided in the main unit (10), and a tool (22) is attached to the spindle (20). The spindle (20) moves along a B-axis in the front-and-rear direction and a U-axis in the left-and-right direction by a moving unit (24). A clamping device (34) for clamping the workpiece (36a) is disposed under the tool (22) in the main unit (10). The clamping device (34) moves along the Z-axis in the left-and-right direction by a workpiece slide (30). A workpiece magazine unit (50) is provided at a side of the main unit (10). A transporting wheel (56) is housed in the workpiece magazine unit (50) so that the transporting wheel can rotate about an axis of rotation D extending in the left-and-right direction.

In using the machining device described in U.S. Patent No. 9,242,327, an access cover (54) of the workpiece magazine unit (50) is opened, and a plurality of workpieces (36b to 36z) are mounted on the transporting wheel (56) while rotating the transporting wheel.

In the subsequent loading, one workpiece (36j) among the workpieces (36b to 36z) in the workpiece magazine unit (50) is placed at a side of the clamping device (34) when the transporting wheel (56) is rotated. Thereafter, the clamping device (34) in the main unit (10) is moved into the workpiece magazine unit (50) in the X-direction by the workpiece slide (30), and the workpiece (36j) is held by the clamping device (34). Then, the clamping device (34) returns into the main unit (10) by the workpiece slide (30).

In the technique described in U.S. Patent No. 9,242,327, however, an operator cannot reach the back of the transporting wheel (56) even when the access cover (54) of the workpiece magazine unit (50) is open. Accordingly, mounting a workpiece on a rear portion of the transporting wheel (56) requires rotation of the transporting wheel. This makes an operation of replacing and/or mounting workpiece(s) bothersome.

Depending on a design of a machining device, the workpiece slide (30) for moving the clamping device (34) between the inside of the main unit (10) and the inside of the workpiece magazine unit (50) cannot be used in the main unit (10). Furthermore, depending on a design of the machining device, it may be impossible to use the rotatable transporting wheel (56) for the workpiece magazine unit (50).

Further related background art is disclosed in DE 41 16 091 C1. Specifically, DE 41 16 091 C1 discloses a magazine for tools/workpieces and a removing device. The tool or workpiece magazine has tool holders disposed on a circular arc, from which the tools or workpieces can be removed by means of the removing device disposed centrally relative to the circular arc. The removing device comprises a column which is turnable around the axis thereof and on which a carriage is axially and slidably mounted. The carriage carries transversely extendable telescoping arms, at the free end of which there is disposed a gripper having gripping jaws.

The present invention has been made in view of the above circumstances, and an object to be achieved by the present invention is to make it possible to load workpieces from a storage stand into a holder even when the motion of the storage stand that stores a plurality of workpieces and the motion of the workpiece holder disposed in a machining device unit are minimized.

### Summary of the invention

In order to achieve the above-mentioned object, the present invention provides a machining device as defined in claim 1.

Other features of the present invention will be clarified by the description of the specification and the drawings described later.

According to the present invention, it is possible to load a certain workpiece among a plurality of workpieces stored in the storage stand into a holder in the housing of the machining device unit, with minimum motions of the holder and the storage stand in the machining device unit.

### Brief description of the drawings

Fig. 1 is a front view of a machining device shown in a state in which a housing of a machining device unit and a housing of a loading device are broken;
Fig. 2 is a plan view of the machining device shown in a state in which the housing of the machining device unit and the housing of the loading device are broken;
Fig. 3 is a front view for explaining an operation of the machining device;
Fig. 4 is a front view for explaining an operation of the machining device;
Fig. 5 is a front view for explaining an operation of the machining device;
Fig. 6 is a front view for explaining an operation of the machining device;
Fig. 7 is a front view for explaining an operation of the machining device;
Fig. 8 is a front view for explaining an operation of the machining device; and
Fig. 9 is a plan view of a machining device according to a second embodiment, that does not form part of the present invention.

### Detailed description of the invention

At least the following embodiments will be shown according to the description and drawings described below.

A loading device for loading workpieces into a holder disposed in a housing of a machining device unit through an access hole for transfer formed in the housing of the machining device unit, including: a storage stand for storing a plurality of workpieces in such a manner that the workpieces are arranged vertically, the storage stand being disposed outside the housing of the machining device unit; a transfer device; and an elevator for carrying the transfer device up and down at a side of the storage stand outside the housing of the machining device unit, the loading device being configured so that: the elevator moves the transfer device to a level of a certain workpiece of the plurality of workpieces and the transfer device pulls out the workpiece from the storage stand; and the elevator moves the transfer device to a level of the access hole for transfer and the transfer device loads the workpiece into the holder through the access hole for transfer, will be shown.

In addition, a machining device including: a housing having an access hole for transfer formed therein; a tool disposed in the housing; a rotational drive device for rotary driving the tool, the rotational drive device being disposed in the housing; a holder for holding workpieces, the holder being disposed in the housing; a the three-dimensional displacement mechanism for driving the tool and the rotational drive device so as to move, relative to the holder in the housing of the machining device unit, the tool and the rotational drive device in a Z-direction and X- and Y-directions, the Z-direction being parallel to a rotation shaft of the rotational drive device, the X- and Y-directions being each perpendicular to the Z-direction and perpendicular to each other; a storage stand for storing a plurality of workpieces outside the housing in such a manner that the workpieces are arranged vertically; a transfer device; and an elevator for carrying the transfer device up and down at a side of the storage stand outside the housing, the machining device being configured so that: the elevator moves the transfer device to a level of a certain workpiece of the plurality of workpieces and the transfer device pulls out the workpiece from the storage stand; and the elevator moves the transfer device to a level of the access hole for transfer and the transfer device loads the workpiece into the holder through the access hole for transfer, will be shown.

According to the above, since a certain workpiece among the plurality of workpieces stored in the storage stand is loaded into the holder in the housing of the machining device unit by the transfer device and the elevator, the motions of the holder and the storage stand can be minimized, and the holder and the storage stand can be fixed.

Preferably, the elevator carries the transfer device at a location for elevation opposite to the access hole for transfer relative to the storage stand; and that: the transfer device pulls out the workpiece from the storage stand to the location for elevation, and the transfer device loads the workpiece into the holder after transferring the workpiece from the location for elevation to the holder through the storage stand and the access hole for transfer.

Preferably, the transfer device is provided with a picker, the picker holding the workpiece; a movement mechanism for moving the picker within a range spanning from the location for elevation to the holder; and a driving device for driving the movement mechanism.

Preferably, a path of the picker moved with the movement mechanism is straight.

According to the above, since the transfer device pulls out the certain workpiece from the storage stand to the location for elevation and transfers the certain workpiece from the location for elevation to the holder through the storage stand and the access hole for transfer, the path which the certain workpiece follows when it is pulled out and the path which the certain workpiece follows when it is transferred to the holder are partially overlapped when seen from above or below. This contributes to reducing the size of the loading device.

According to the invention, the loading device further includes a housing disposed adjacent to the housing of the machining device unit, and the storage stand, the transfer device, and the elevator are disposed in the housing of the loading device; and a second access hole for transfer is formed in the housing of the loading device, the second access hole for transfer being communicated with the access hole for transfer formed in the housing of the machining device unit.

According to the above, since the internal space of the housing of the machining device unit is separated from the internal space of the housing of the loading device, the dust generated during the machining of the workpiece held by the holder in the housing of the machining device unit hardly enters the housing of the loading device.

Preferably, the loading device further includes a door, and the second access hole for transfer is provided so that the second access hole for transfer is closed at normal times, and the door can open inward into the housing of the machining device unit.

According to the above, since the door can open inward into the housing of the machining device unit, the door is opened by the transfer device or the holder when the transfer device loads the certain workpiece into the holder through the access hole for transfer. Furthermore, since the door is closed at normal times, the dust generated during the machining of the workpiece hardly enters the housing of the loading device.

### First embodiment

Referring to the drawings, an embodiment of the present invention is now described. Technically preferable limitations are, however, given to the embodiment described below in order to implement the present invention. Therefore, the scope of the present invention is not limited to the following embodiment and illustrative examples.

### <Machining device>

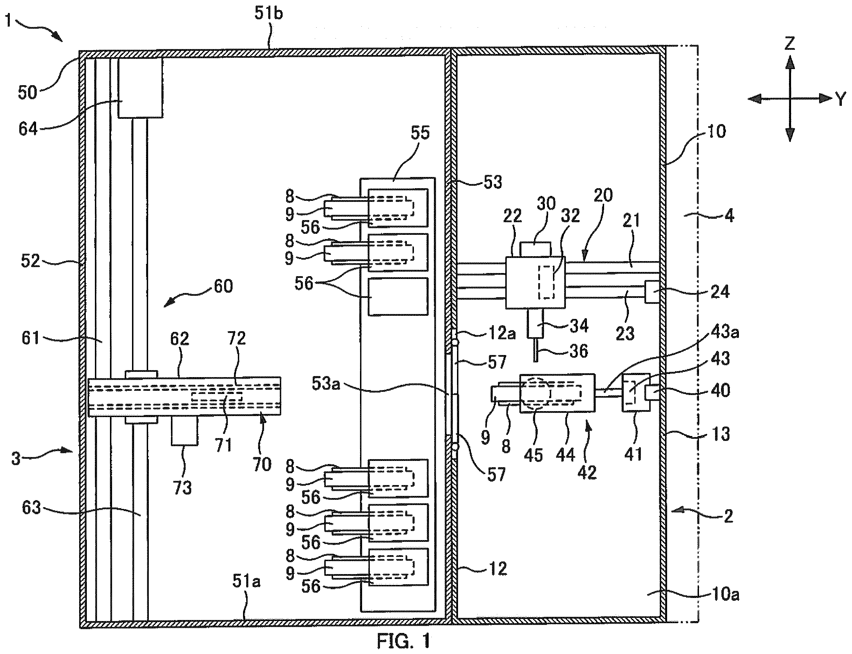

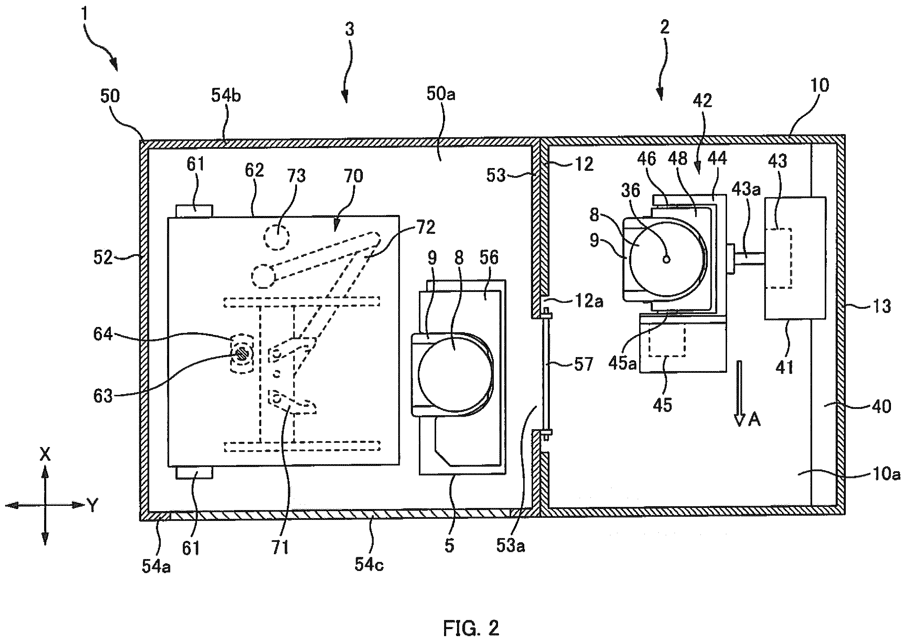

Figs. 1 and 2 are front and top views, respectively, of a machining device 1. In Figs. 1 and 2, X-, Y-, and Z-axes are shown as support lines representing the directions. The X-, Y- and Z-axes are perpendicular to each other. The directions aligned with the X- and Y-axes are parallel to the horizontal and the direction aligned with the Z-axis is parallel to the vertical. The X-axis may be inclined at an angle from the horizontal and the Z-axis may be inclined at an angle from the vertical.

As shown in Figs. 1 and 2, the machining device 1 has a machining device unit 2 for machining plate-like workpieces (works) 8, a loading device 3 for loading and unloading the workpieces 8 into and from the machining device unit 2, and a control unit 4 for controlling the machining device unit 2 and the loading device 3. Each workpiece 8 is made of, for example, a ceramic material (such as a zirconia ceramic material), a resin material, a glass material, a metal material or a wax material. A machined product obtained by machining the workpiece 8 is, for example, an artificial tooth, a dental crown, a dental bridge or an abutment.

### <Machining device unit>

The machining device unit 2 has a housing 10, a spindle motor 32, a spindle 34, a cutting tool 36, a tilt mechanism 42, a holder 48, and a three-dimensional displacement mechanism. The three-dimensional displacement mechanism is for driving the spindle 34 so as to move, relative to the holder 48, the spindle 34 in X-, Y- and Z-directions. Specifically, the three-dimensional displacement mechanism is provided with a Z-directional linear driving mechanism 30 that drives the spindle 34 so as to move the spindle 34 in the Z-direction parallel to the rotation shaft of the spindle motor 32, a Y-directional linear driving mechanism 20 that drives the spindle 34 so as to move the spindle 34 in the Y-direction, and an X-directional linear driving mechanism 40 that moves the holder 48 so as to move the holder 48 in the X-direction.

The housing 10 has a box-like shape and an internal space 10a is formed in the housing 10. An access hole for transfer 12a is formed in a side section 12 of the housing 10.

The Y-directional linear driving mechanism 20 has a linear guide member 21, a carriage 22, a Y-directional linear transmission mechanism 23, and a motor 24. The both ends of the linear guide member 21 are supported by side sections 12 and 13 of the housing 10 so that the linear guide member 21 is held and extends between the side sections 12 and 13. The direction in which the linear guide member 21 extends is aligned with the Y-direction. The carriage 22 is slidably attached to the linear guide member 21. The carriage 22 is provided so that it can be moved in the Y-direction along the linear guide member 21. The carriage 22 is connected to the Y-directional linear transmission mechanism 23. The Y-directional linear transmission mechanism 23 is connected to the motor 24. The Y-directional linear transmission mechanism 23 is disposed between the side sections 12 and 13, and the motor 24 is disposed on the side section 13. The Y-directional linear transmission mechanism 23 is, for example, a belt transmission mechanism, a chain transmission mechanism, a ball screw transmission mechanism or a rack-and-pinion mechanism. The power of the motor 24 is transmitted to the carriage 22 via the Y-directional linear transmission mechanism 23 and therefore, the carriage 22 is moved in the Y-direction by the motor 24.

The carriage 22 is provided with the linear driving mechanism 30, the spindle motor 32, and the spindle 34. Specifically, the linear driving mechanism 30 and the spindle motor 32 are attached to the carriage 22 and the spindle 34 is connected to the spindle motor 32 and the linear driving mechanism 30 via a transmission mechanism. The linear driving mechanism 30 drives the spindle 34 so as to move the spindle 34 in the Z-direction and the spindle motor 32 drives the spindle 34 on the rotation shaft parallel to the Z-axis. To the spindle 34, the cutting tool 36 such as an endmill, a drill, a reamer or a tap is attached. The cutting tool 36 can be attached to and removed from the spindle 34. In the housing 10 (such as on a moving unit 41 described below), a magazine is provided in which spare cutting tools are contained.

The X-directional linear driving mechanism 40 is attached to the side section 13 of the housing 10 so that the X-directional linear driving mechanism 40 is aligned parallel to the X-axis. The linear driving mechanism 40 is connected to the moving unit 41. The linear driving mechanism 40 drives the moving unit 41 so as to move the moving unit 41 in the X-direction.

To the moving unit 41, the tilt mechanism 42 and the holder 48 are attached. The holder 48 is for holding a workpiece 8. The tilt mechanism 42 is for turning the holder 48 and the workpiece 8 on a first rotation shaft parallel to the Y-axis and turning the holder 48 and the workpiece 8 on a second rotation shaft that is perpendicular to the first rotation shaft.

The tilt mechanism 42 has a first motor for turn movement 43, a turn stick 44, and a second motor for turn movement 45. The first motor for turn movement 43 is disposed in the moving unit 41 so that its output rotation shaft (first rotation shaft) 43a is aligned parallel to the X-axis. The output rotation shaft 43a of the motor 43 extends from the inside to the outside of the moving unit 41 in the X-direction. The output rotation shaft 43a of the first motor for turn movement 43 is connected to the center of the arch-like turn stick 44. The second motor for turn movement 45 is attached to a periphery of one end of the turn stick 44. An output rotation shaft (second rotation shaft) 45a of the second motor for turn movement 45 passes inward through the one end of the turn stick 44. The output rotation shaft 45a of the second motor for turn movement 45 is perpendicular to the output rotation shaft 43a of the first motor for turn movement 43. The output rotation shaft 45a of the second motor for turn movement 45 is connected to one end of an arch-like holder 48. The other end of the holder 48 is connected to the other end of the turn stick 44 through a rotation shaft 46 coaxial with the output rotation shaft 45a of the second motor for turn movement 45.

The workpiece 8 is held by the holder 48 with being fitted in a cassette 9. The workpiece 8 has a disc-like shape and the cassette 9 has a ring-like shape. The workpiece 8 is held in the cassette 9 with the periphery of the workpiece 8 engaged with the cassette 9. The top and bottom surfaces of the workpiece 8 are exposed without being covered with the cassette 9. The holder 48 holds the outer periphery of the cassette 9 by, for example, magnetic attraction, suction, clamping, locking or engagement. It should be noted that the workpiece 8 may be held directly by the holder 48 without using the cassette 9.

When the first motor for turn movement 43 is operated, the turn stick 44, the holder 48, and the workpiece 8 are turned about the output rotation shaft 43a. When the second motor for turn movement 45 is operated, the holder 48, the cassette 9, and the workpiece 8 are turned about the output rotation shaft 45a.

### <Loading device>

The loading device 3 includes a housing 50, a storage stand 55 disposed in the housing 50, a transfer device 70 for transferring the workpiece 8 and the cassette 9 so as to deliver the workpiece 8 and the cassette 9 in the Y-direction, and an elevator 60 for carrying the transfer device 70 up and down in the housing 50.

The housing 50 has a box-like shape and an internal space 50a is formed in the housing 50. A side section 53 of the housing 50 is fixed to the side section 12 of the housing 10 of the machining device unit 2, and the housing 50 and the housing 10 are juxtaposed with each other. An access hole for transfer 53a is formed in the side section 53 of housing 50. The access hole for transfer 53a is overlapped with the access hole for transfer 12a in the housing 10, and the internal space 50a of the housing 50 and the internal space 10a of the housing 10 are communicated with each other through the access holes for transfer 12a and 53a.

To the side section 53 of the housing 50, a door 57 for opening and closing the access hole for transfer 53a is provided. The door 57 opens outward from the housing 50 and inward into the housing 10. The door 57 is of the normally closed type which is closed at normal times with biasing means such as a spring.

The storage stand 55 is arranged at a side of the side section 53 of the housing 50. The storage stand 55 can holds a plurality of workpieces 8 arranged vertically, with the longest side of each workpiece aligned horizontally. Specifically, hold shelves 56 are disposed vertically in the storage stand 55. These hold shelves 56 are divided into two groups: upper and lower ones. The distance between the lowermost hold shelf 56 in the upper group and the uppermost hold shelf 56 in the lower group is larger than the distances between other adjacent hold shelves 56. The position (height) of the access hole for transfer 53a in the housing 50 is determined between the lowermost hold shelf 56 in the upper group and the uppermost hold shelf 56 in the lower group. In this embodiment, the number (i.e., three) of the hold shelves 56 in the upper group is equal to the number (i.e., three) of the hold shelves 56 in the lower group, but the number of the hold shelves in each group is not limited to three.

The cassette 9 can be inserted into the hold shelf 56 in the Y-direction. The cassette 9 together with the workpiece 8 held in the cassette 9 can be inserted into the hold shelf 56 or the cassette together with the workpiece 8 can be removed from the hold shelf 56. The direction in which the cassette 9 is inserted into the hold shelf 56 is aligned with the direction in which it is delivered from the housing 50 to the housing 10 through the access holes for transfer 12a and 53a. The direction in which the cassette 9 is removed from the hold shelf 56 is aligned with the direction in which it is delivered from the housing 10 to the housing 50 through the access holes for transfer 12a and 53a. The hold shelf 56 has a locking mechanism that uses, for example, magnetic attraction, suction, clamping, locking or engagement. The cassette 9 held in the hold shelf 56 is fixed to the hold shelf 56 by the locking mechanism, and this lock can be released.

A door 54c is provided on a front section 54a of the housing 50 to allow loading and removal of the cassettes 9 and the workpieces 8 into and from the storage stand 55. The door 54c may be provided on a side section 52 or a rear section 54b rather than on the front section 54a.

The elevator 60 is disposed near the side section 52 opposite to the side section 53. The elevator 60 has linear guide members 61, an elevating unit 62, a linear transmission mechanism 63, and a motor 64. Each linear guide member 61 is attached to the housing 50 so that it extends vertically (in the Z-direction). The elevating unit 62 is slidably attached to the linear guide members 61. The elevating unit 62 is provided so that it can move in the Z-direction along the linear guide members 61 at a location (location for elevation) opposite to the access holes for transfer 12a and 53a relative to the storage stand 55. Furthermore, the elevating unit 62 is connected to the linear transmission mechanism 63, and the linear transmission mechanism 63 is connected to the motor 64. The linear transmission mechanism 63 is disposed between a top 51b and a bottom 51a of the housing 50. The motor 64 is provided on the top 51b of the housing 50. The linear transmission mechanism 63 is, for example, a ball screw transmission mechanism, a rack-and-pinion mechanism, a belt transmission mechanism or a chain transmission mechanism. The power of the motor 64 is transmitted to the elevating unit 62 via the linear transmission mechanism 63 and the elevating unit 62 thus moves in the Z-direction by the motor 64.

As described above, since the Z-axis is perpendicular to or inclined at an angle from the horizontal surface, the elevating unit 62 moves up and down vertically or obliquely relative to the horizontal surface.

The elevating unit 62 is provided with the transfer device 70. The transfer device 70 has a picker (such as a clamping device) 71, a movement mechanism 72 and a motor 73. The movement mechanism 72 is comprised of, for example, an arm mechanism that can be unfolded and folded in the Y-direction. The base of the movement mechanism 72 is attached to the elevating unit 62. The picker 71 is provided at the distal end of the movement mechanism 72. The motor 73 is connected to the movement mechanism 72 and the power of the motor 73 is transmitted to the movement mechanism 72. The movement mechanism 72 is driven by the motor 73. The movement mechanism 72 is unfolded and extended in the Y-direction away from the elevating unit 62 toward the side section 13 and folded and retracted in the Y-direction using the power of the motor 73. The path which the picker 71 follows when it moves in response to the extension and retraction of the movement mechanism 72 is on a straight line that is substantially parallel to the Y-axis. A range over which the picker 71 travels by the movement mechanism 72 falls in an area from the elevating unit 62 to the holder 48 along the Y-axis.

The picker 71 holds the cassette 9 by, for example, magnetic attraction, suction, clamping, locking or engagement. For example, the picker 71 is a clamping device that clamps the cassette 9, an electromagnet that can retain the cassette 9 by the magnetic force or a nozzle that sucks the cassette 9 using a negative pressure.

<Control unit>

The linear driving mechanism 20 (especially the motor 24), the linear driving mechanism 30, the spindle motor 32, the linear driving mechanism 40, the tilt mechanism 42 (especially motors 43 and 45), the elevator 60 (especially the motor 64) and the transfer device 70 (especially the motor 73) are controlled by the control unit 4. The control unit 4 is disposed on or in, for example, the housing 10. The control unit 4 is a control circuit with various driving circuits (such as motor drivers) and a microcomputer (such as a program logic controller).

### <Operations and method of using machining device>

Operations of the machining device 1 and a method of using the machining device 1 are described.

### (1) Initial state

When the machining device I is activated, the control unit 4 operates the components of the machining device 1 to their initial states. Specifically, the linear driving mechanisms 20, 30, and 40 are operated by the control unit 4 in order to move the holder 48 to a position under the spindle 34. The tilt mechanism 42 is operated by the control unit 4 so that the holder 48 is oriented horizontally (parallel to the Y- and X-axes). The transfer device 70 is unfolded by the control unit 4 so that the picker 71 is retracted into the elevating unit 62. The elevator 60 is then operated by the control unit 4 and the elevating unit 62 is moved to a predetermined ready position (such as at the highest position within the housing 50 or a position higher than the uppermost hold shelf 56).

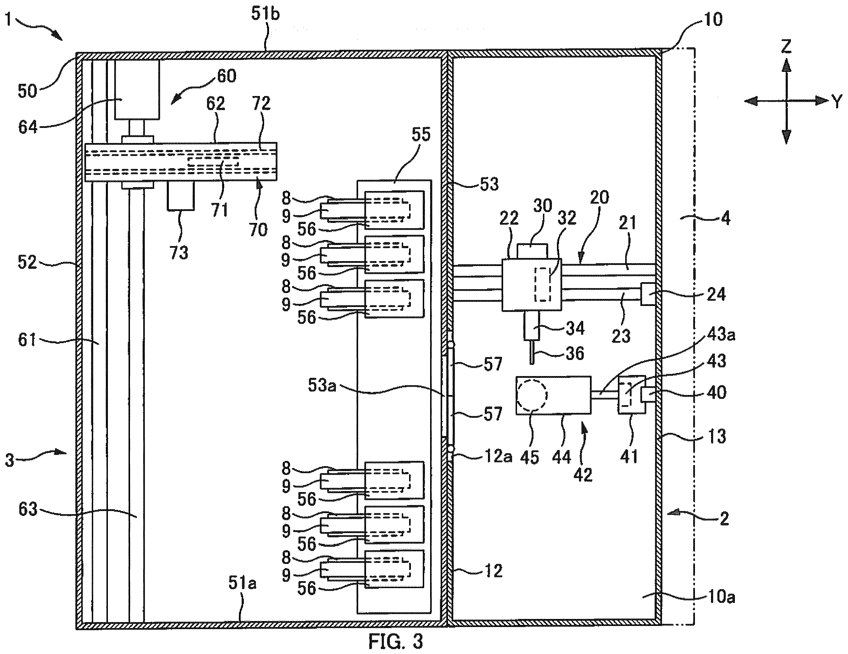

### (2) Installation (see, Fig. 3)

Next, the door 54c of the housing 50 is opened. The cassettes 9 each having a workpiece 8 that has not yet been machined are inserted into the hold shelves 56 of the storage stand 55 in the housing 50 and held in the respective hold shelves 56. Subsequently, the door 54c of the housing 50 is closed.

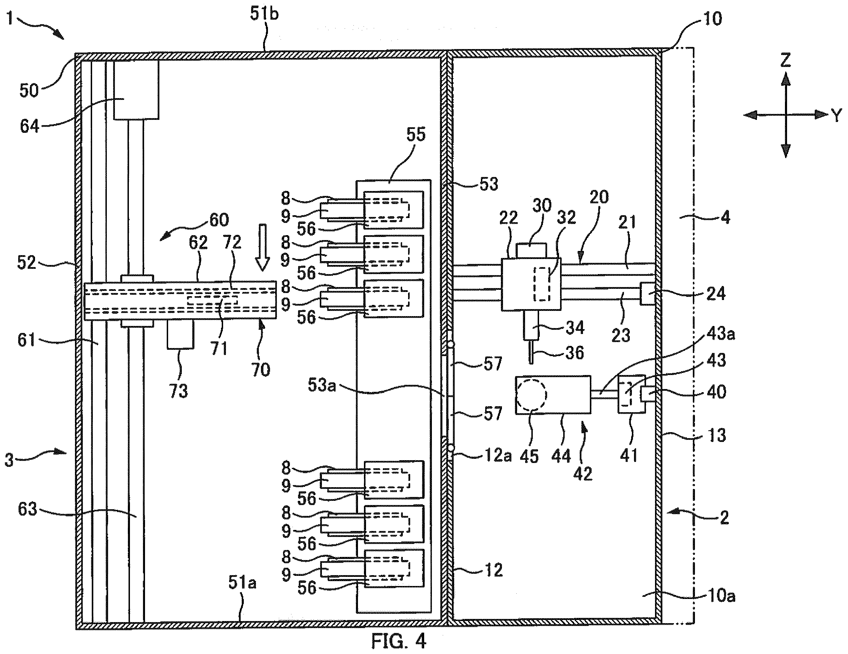

### (3) Displacement to a level of the hold shelf (see, Fig. 4)

Next, the elevator 60 is controlled by the control unit 4. As a result, as shown in Fig. 4, the elevating unit 62 is moved to a level of one of the hold shelves 56 by the motor 64.

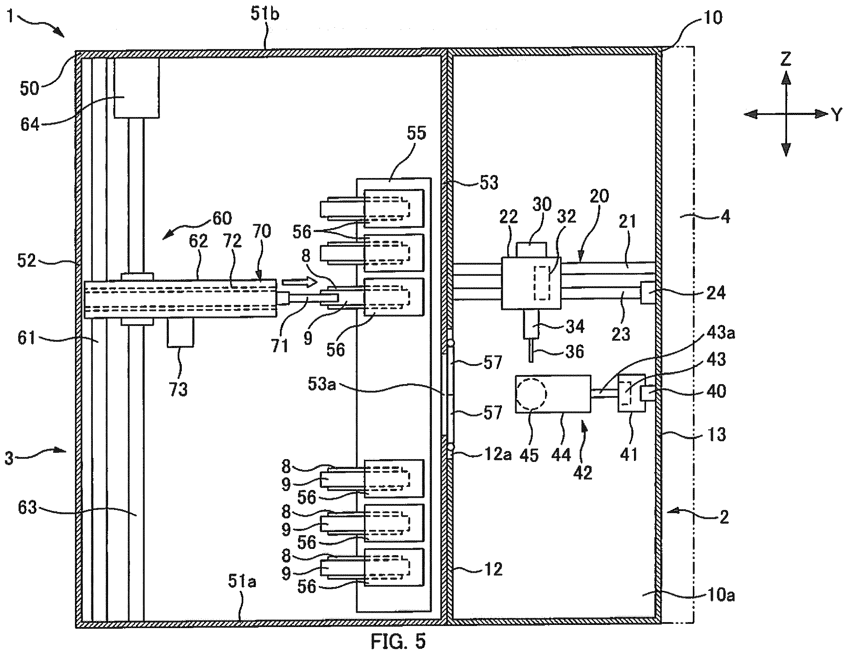

### (4) Pick-up (see, Fig. 5)

Next, the transfer device 70 is controlled by the control unit 4. As a result, as shown in Fig. 5, the movement mechanism 72 of the transfer device 70 is unfolded and extended by the motor 73 and the picker 71 approaches the hold shelf 56 in the Y-direction. When the picker 71 reaches the cassette 9, the cassette 9 is held by the picker 71.

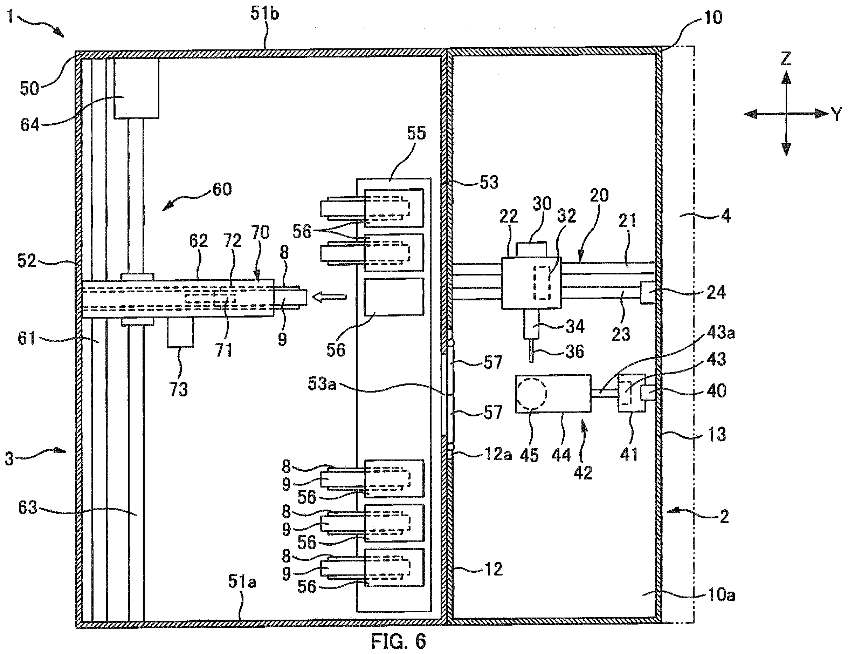

### (5) Removal (see, Fig. 6)

Next, the transfer device 70 is controlled by the control unit 4. As a result, the movement mechanism 72 of the transfer device 70 is folded and retracted by the motor 73 and the picker 71 moves away from the hold shelf 56 in the Y-direction. The cassette 9 and the workpiece 8 are removed from the hold shelf 56. When the picker 71 reaches the elevating unit 62, the transfer device 70 and the motor 73 are stopped.

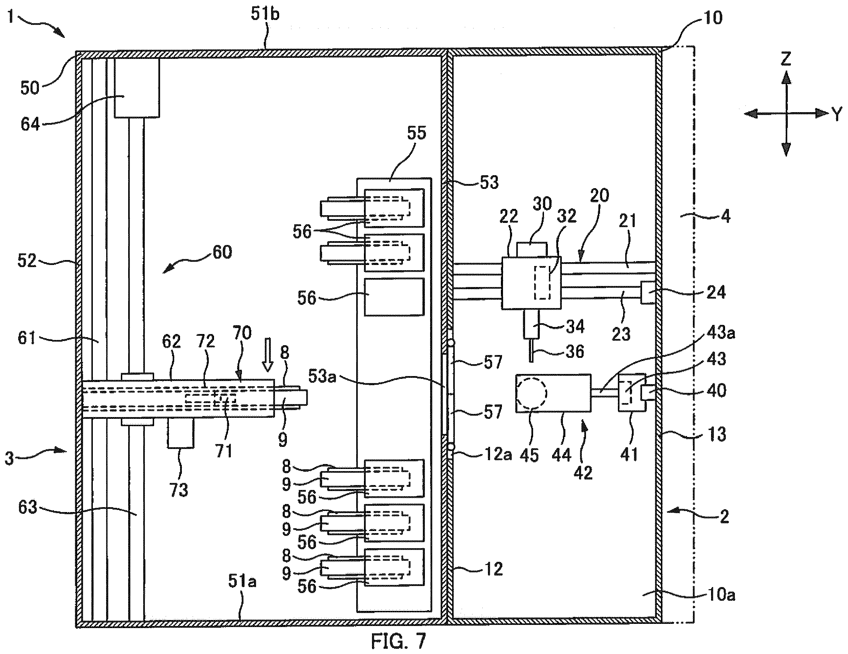

### (6) Displacement to a level of the access holes for transfer (see, Fig. 7)

Next, the elevator 60 is controlled by the control unit 4. As a result, as shown in Fig. 7, the elevating unit 62 is moved (up or down) to a level of the access holes for transfer 12a and 53a by the motor 64.

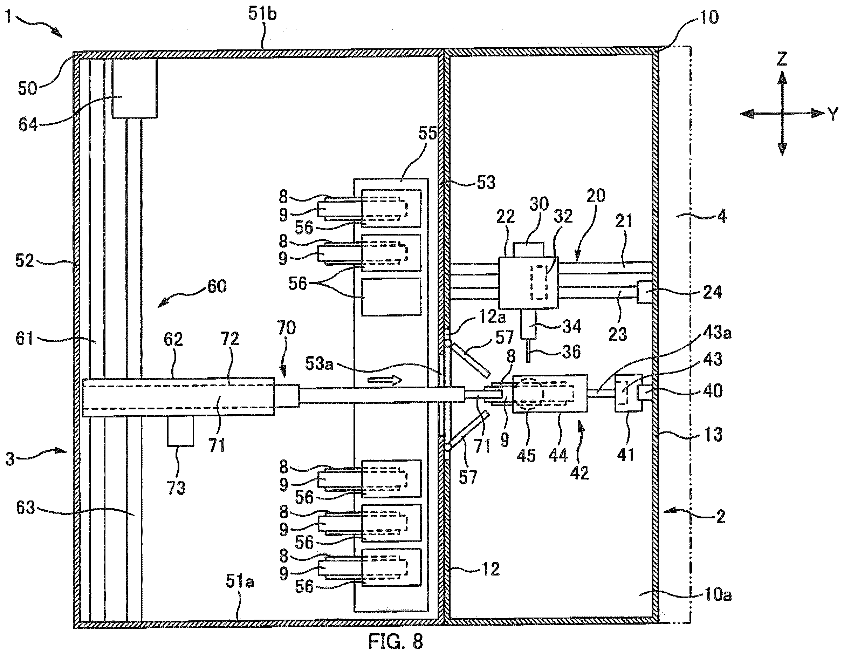

### (7) Loading (see, Fig. 8)

Next, the linear driving mechanism 40 is controlled by the control unit 4. As a result, the holder 48 is moved in the X-direction, by the linear driving mechanism 40, to a position where the holder 48 is aligned along the X-axis with the access holes for transfer 12a and 53a (see, an arrow A in Fig. 2).

Furthermore, the transfer device 70 is controlled by the control unit 4. As a result, as shown in Fig. 8, the movement mechanism 72 of the transfer device 70 is unfolded and extended by the motor 73 and the picker 71 moves toward the holder 48 in the Y-direction. When the picker 71 passes the access holes for transfer 12a and 53a, the door 57 is opened by the movement mechanism 72, the picker 71 or the cassette 9. When the cassette 9 reaches the holder 48 and is loaded into it, the cassette 9 is held by the holder 48 and the holding of the cassette 9 by the picker 71 is released.

### (8) Retraction (see, Fig. 1)

Next, the transfer device 70 is controlled by the control unit 4. As a result, the movement mechanism 72 of the transfer device 70 is folded and retracted by the motor 73 and the picker 71 leaves from the holder 48 in the Y-direction. When the picker 71 reaches the elevating unit 62 through the access holes for transfer 12a and 53a, the transfer device 70 and the motor 73 are stopped. When the picker 71 enters the housing 50, the door 57 is closed due to the bias force exerted by the biasing means.

### (9) Machining

Next, the spindle motor 32 is operated by the control unit 4. As a result, the spindle 34 and the cutting tool 36 are driven by the spindle motor 32 and revolve. With the spindle motor 32 being operated, the control unit 4 controls the linear driving mechanisms 20, 30, and 40. As a result, the spindle 34 and the cutting tool 36 are moved in the Y-direction by the linear driving mechanism 20 and moved up and down by the linear driving mechanism 30. The workpiece 8 and the holder 48 are moved in the X-direction by the linear driving mechanism 40. Accordingly, a relative 3D position of the tip of the cutting tool 36 to the center of the workpiece 8 (the intersection between the first rotation shaft and the second rotation shaft of the tilt mechanism 42) is changed. When the cutting tool 36 contacts the workpiece 8 during the displacement, the workpiece 8 is cut by the cutting tool 36. Furthermore, when the control unit 4 controls the tilt mechanism 42 while the workpiece 8 is being cut, the holder 48 and the workpiece 8 are turned by the tilt mechanism 42 about the output rotation shafts 43a and 45a of the motors 43 and 45, respectively. As a result, a contact angle between the cutting tool 36 and the workpiece 8 varies.

### (10) Reception

Next, the linear driving mechanism 40 is controlled by the control unit 4. As a result, the holder 48 is moved in the X-direction, by the linear driving mechanism 40, to a position where the holder 48 is aligned along the X-axis with the access holes for transfer 12a and 53a.

Furthermore, the transfer device 70 is controlled by the control unit 4. As a result, the movement mechanism 72 of the transfer device 70 is unfolded and extended by the motor 73 and the picker 71 moves toward the holder 48 in the Y-direction. When the picker 71 passes the access holes for transfer 12a and 53a, the door 57 is opened by the movement mechanism 72, the picker 71 and the cassette 9. When the picker 71 reaches the cassette 9 held in the holder 48, then the cassette 9 is held by the picker 71.

### (11) Retraction

Next, the transfer device 70 is controlled by the control unit 4. As a result, the movement mechanism 72 of the transfer device 70 is folded and retracted by the motor 73 and the picker 71 leaves from the holder 48 in the Y-direction. When the picker 71 reaches the elevating unit 62 through the access holes for transfer 12a and 53a, the transfer device 70 and the motor 73 are stopped. When the picker 71 enters the housing 50, the door 57 is closed due to the bias force exerted by the biasing means.

### (12) Displacement to a level of the hold shelf

Next, the elevator 60 is controlled by the control unit 4. As a result, the elevating unit 62 is moved (up or down) to a level of an empty hold shelf 56 by the motor 64.

### (13) Insertion

Next, the transfer device 70 is controlled by the control unit 4. As a result, the movement mechanism 72 of the transfer device 70 is unfolded and extended by the motor 73 and the picker 71 approaches the hold shelf 56 in the Y-direction. The cassette 9 is then inserted into the hold shelf 56 and held by the hold shelf 56. The holding of the cassette 9 by the picker 71 is then released.

### (14) Retraction

Next, the transfer device 70 is controlled by the control unit 4. As a result, the movement mechanism 72 of the transfer device 70 is folded and retracted by the motor 73. The picker 71 leaves from the hold shelf 56 in the Y-direction. When the picker 71 reaches the elevating unit 62, the transfer device 70 and the motor 73 are stopped.

(15) If another workpiece 8 is to be machined, the aforementioned steps (3) to (14) are repeated. If no workpiece 8 is additionally machined, the elevator 60 is controlled by the control unit 4 and the elevating unit 62 is moved to a predetermined ready position (such as at the highest position within the housing 50 or a position higher than the uppermost hold shelf 56).

### <Effects and advantages>

According to the embodiment described above, the following effects can be obtained.
(1) Attachment and removal of each workpiece 8 and the cassette 9 to and from the holder 48 are performed automatically by the loading device 3, which improves operation efficiencies.
(2) Vertical arrangement of the hold shelves 56 makes it possible to insert and remove the workpieces 8 and the cassettes 9 into and from all of the hold shelves 56 with the door 54c of the housing 50 opened.
(3) Since one of the workpieces 8 stored in the storage stand 55 is loaded into the holder 48 in the housing 10 by the transfer device 70 and the elevator 60, the movement of the holder 48 can be minimized and the storage stand 55 can be secured. A user can use the loading device 3 as a module (i.e., a functionally unitary unit) because the storage stand 55, the elevator 60 and the transfer device 70 are disposed in the housing 50.
(4) Since the internal space of the housing 10 and the internal space of the housing 50 are partitioned as separate compartments by the side sections 12 and 53, cutting dust generated when the workpiece 8 is cut in the housing 10 does not adhere to the workpiece(s) 8 in the housing 50. In particular, the door 57 is closed when the workpiece 8 is being cut in the housing 10. This prevents any cutting dust from entering the housing 50.
(5) The direction in which the workpiece 8 and the cassette 9 are inserted and removed into and from the hold shelf 56 is aligned with the direction in which the workpiece 8 and the cassette 9 are inserted and removed into and from the holder 48. When the workpiece 8 and the cassette 9 are inserted into and removed from the holder 48, the workpiece 8, the cassette 9, and the picker 71 pass under or over a hold shelf 56 in the Y-direction and the storage stand 55 as well as the hold shelves 56 are partially overlapped with the paths of the workpiece 8, the cassette 9, and the picker 71 when seen from above or below. As apparent from the above, the positions where the elevator 60, the storage stand 55 and the hold shelves 56 are placed were refined and the direction of motion of the transfer device 70 was also refined. The loading device 3 is thus compact. In particular, the path of the workpiece 8, the cassette 9, and the picker 71 moved by the movement mechanism 72 is straight and thus the loading device 3 can further be reduced in size.
(6) Since the elevator 60 is disposed in the housing 50 and the transfer device 70 is attached to the elevating unit 62 of the elevator 60, the transfer device 70 is entirely housed and stays ready in the housing 50 when the workpiece 8 is being cut. Accordingly, no cutting dust generated when workpiece 8 is being cut is adhered to the transfer device 70.

### === Second embodiment ===

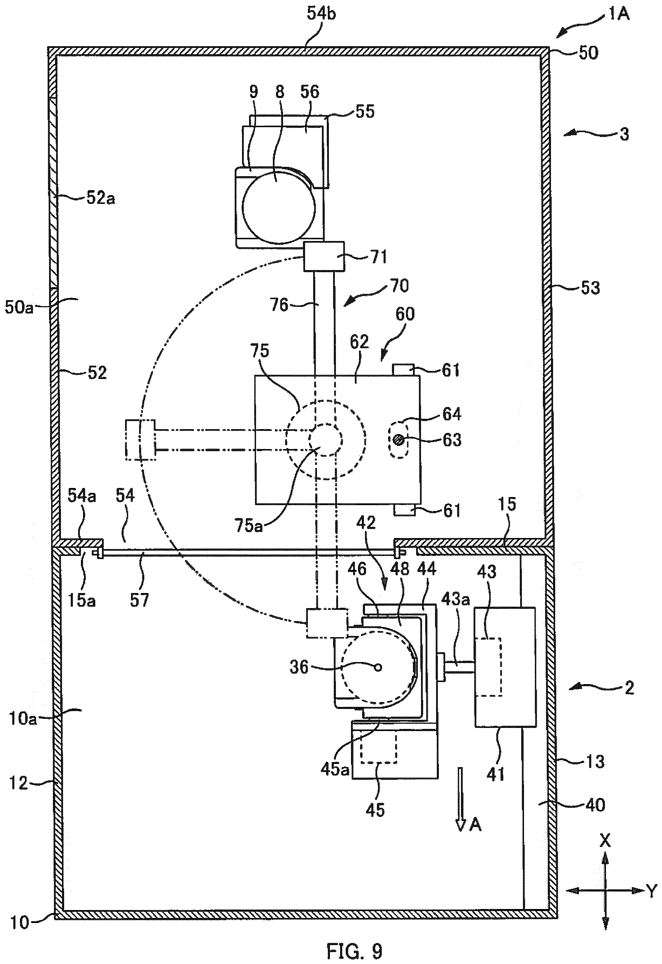

Fig. 9 is a top view of a machining device 1A according to a second embodiment, which does not form part of the present invention. Components of the machining device 1A according to the second embodiment which are similar to those of the machining device 1 according to the first embodiment are depicted like reference numerals. Furthermore, description will be made mainly on components of the machining device 1A according to the second embodiment which are different from those of the machining device 1 according to the first embodiment.

### <Machining device unit>

The access hole for transfer 12a in the first embodiment is formed in the side section 12 of the housing 10 while an access hole for transfer 15a in the second embodiment is formed in a rear section 15 of the housing 10. Except for this, a machining device unit 2 of the second embodiment is configured in the same manner as the machining device unit 2 of the first embodiment.

### <Housing of a loading device of a loading mechanism>

The housing 50 and the housing 10 in the first embodiment are arranged side by side while housings 50 and 10 in the second embodiment are arranged with the one of them in front of the other. The housing 50 of the second embodiment is described in detail now.

A front section 54a of the housing 50 having a box-like shape is secured to the rear section 15 of the housing 10 so that the housing 50 and the housing 10 are adjacent to each other. An access hole for transfer 54d is formed in the front section 54a of the housing 50, and the access hole for transfer 54d is overlapped with the access hole for transfer 15a in the housing 10. An internal space 50a of the housing 50 and an internal space 10a of the housing 10 are communicated with each other through the access holes for transfer 15a and 54d.

A door 52a is provided on or in the side section 52 of the housing 50 to insert and remove cassettes 9 and workpieces 8.

A door 57 is provided on or in the front section 54a of the housing 50 to open and close the access hole for transfer 54d.

### <Elevator of the loading mechanism>

An elevator 60 in the second embodiment is disposed in a manner similar to the elevator 60 in the first embodiment. Specifically, the elevator 60 in the second embodiment has linear guide members 61, an elevating unit 62, a linear transmission mechanism 63, and a motor 64.

The elevating unit 62 is disposed between a storage stand 55 described later and a holder 48 when seen from above, and the elevating unit 62 moves in the Z-direction at this location.

### <Storage stand of the loading mechanism>

The storage stand 55 in the first embodiment is disposed near the side section 53 in the housing 50 while the storage stand 55 in the second embodiment is disposed near a rear section 54b in the housing 50. Each cassette 9 can be inserted into and removed from one of the hold shelves 56 of storage stand 55 in the Y-direction in the first embodiment while each cassette 9 in the second embodiment can be inserted into and removed from one of hold shelves 56 of the storage stand 55 in a direction following an arc centered on a rotation shaft 75a described later.

Except for the above, the storage stand 55 in the second embodiment is identical to the storage stand 55 in the first embodiment.

### <Transfer device of the loading mechanism>

The transfer device 70 in the first embodiment transfers the workpiece 8 and the cassette 9 straight along the Y-axis while the transfer device 70 in the second embodiment transfers the workpiece 8 and the cassette 9 along an arc. The transfer device 70 in the second embodiment is described in detail now.

The transfer device 70 in the second embodiment has a picker 71, a rotational drive device 75 and an arm 76. The rotational drive device 75 is attached to the elevating unit 62 of the elevator 60. A rotation shaft 75a of the rotational drive device 75, such as a motor, is aligned parallel to the Z-axis. The base of the arm 76 is connected to the rotation shaft 75a of the rotational drive device 75. The arm 76 extends in the radial direction from the rotation shaft 75a. The picker 71 is attached to the tip of the arm 76. The arm 76 is pivoted, by the rotational drive device 75, between a position where it extends backward from the rotation shaft 75a and a position where it extends forward from the rotation shaft 75a. The picker 71 is driven by the rotational drive device 75 to go around the rotation shaft 75a. The path of the picker 71 produced by the rotational drive device 75 is semicircular.

With the arm 76 oriented substantially parallel to the Y-axis, the entire arm 76 is located in the housing 50. With the arm 76 extending backward substantially in parallel to the X-axis, the picker 71 is located near the storage stand 55. With the arm 76 extending forward substantially in parallel to the X-axis, the arm 76 has already passed the access holes for transfer 15a and 54d, and the picker 71 is located near the holder 48.

The picker 71 holds the cassette 9 by, for example, magnetic attraction, suction, clamping, locking or engagement as in the picker 71 in the first embodiment.

### <Operations of the machining device>

The arm 76 is pivoted, by the rotational drive device 75 of the transfer device 70, to a position where it is parallel to the Y-axis.

Next, after the elevating unit 62 and the transfer device 70 are moved to a level of one of the hold shelves 56 by the motor 64, the arm 76 is pivoted, by the rotational drive device 75 of the transfer device 70, to a position where it extends backward in substantially parallel to the X-axis. As a result, the picker 71 approaches the hold shelf 56 and the cassette 9 is held by the picker 71.

Next, the arm 76 is pivoted, by the rotational drive device 75 of the transfer device 70, to a position where it is parallel to the Y-axis. As a result, the picker 71 leaves from the hold shelf 56 and the cassette 9 and the workpiece 8 are removed from the hold shelf 56.

Next, the elevating unit 62 and the transfer device 70 are moved, by the motor 64, to a level of the access holes for transfer 15a and 54d.

Next, the arm 76 is pivoted, by the rotational drive device 75 of the transfer device 70, to a position where it extends forward in substantially parallel to the X-axis. As a result, the picker 71 moves toward the holder 48. Then, when the picker 71 reaches the holder 48 after passing the access holes for transfer 15a and 54d, the cassette 9 is loaded into the holder 48. At this time, the cassette 9 is held by the holder 48 and the holding of the cassette 9 by the picker 71 is released.

Next, the arm 76 is pivoted, by the rotational drive device 75 of the transfer device 70, to a position where it is parallel to the Y-axis. As a result, the picker 71 returns to a position in the housing 50.

Next, with the spindle motor 32 operated, the spindle 34 and the cutting tool are moved in the Y-direction by the linear driving mechanism 2 and moved up and down by the linear driving mechanism 30. The workpiece 8 and the holder 48 are moved in the X-direction by the linear driving mechanism 40. As a result, the workpiece 8 is cut by the cutting tool 36. After the cutting, the spindle motor 32 and the linear driving mechanisms 20, 30, and 40 are stopped.

Next, the arm 76 is pivoted, by the rotational drive device 75 of the transfer device 70, to a position where it extends forward in substantially parallel to the X-axis. As a result, the picker 71 moves toward the holder 48. After the picker 71 passes the access holes for transfer 15a and 54d and reaches the holder 48, the cassette 9 is held by the picker 71.

Next, the arm is pivoted, by the rotational drive device 75 of the transfer device 70, to a position where it is parallel to the Y-axis. As a result, the picker 71 leaves from the holder 48 and returns to a position in the housing 50.

Next, the elevating unit 62 and the transfer device 70 are moved, by the motor 64, to a level of an empty hold shelf 56.

Next, the arm 76 is pivoted, by the rotational drive device 75 of the transfer device 70, to a position where it extends backward in substantially parallel to the X-axis. As a result, the picker 71 moves toward the hold shelf 56. When the picker 71 reaches the hold shelf 56, the cassette 9 is inserted into the hold shelf 56. At this time, the cassette 9 is held by the hold shelf 56 and the holding of the cassette by the picker 71 is released.

Next, the arm 76 is pivoted, by the rotational drive device 75 of the transfer device 70, to a position where it is parallel to the Y-axis. As a result, the picker 71 leaves from the hold shelf 56.

The timing of the operations as described above is controlled by the control unit 4.

### Modified version

While the embodiments for carrying out the present invention have been described, these embodiments are for facilitating understanding of the present invention and are not intended to limit the present invention. Further, the present invention can be modified and improved without departing from the scope thereof as defined by the appended claims.

Changes from the above embodiments will be described below.
(1) In the aforementioned embodiments, the moving unit 41, the tilt mechanism 42, and the holder 48 are moved by the X-directional linear driving mechanism 40 along the X-axis. In place of the moving unit 41, however, a fixed unit may be attached to the housing 10 and the tilt mechanism 42 and the holder 48 may be disposed on the fixed unit as in the case where they are disposed on the moving unit 41 as described above. In this case, the linear guide member 21, the carriage 22, the Y-directional linear transmission mechanism 23, and the motor 24 are driven collectively by the X-directional linear driving mechanism so that they move in the X-direction.
(2) In the aforementioned embodiments, the spindle 34 is moved by the Y-directional linear driving mechanism 20 in the Y-direction. The carriage 22 of the linear driving mechanism 20 may, however, be a fixed unit secured to, for example, the center of the linear guide member 21 so that the spindle is not moved in the Y-direction. In this case, a linear driving mechanism along the Y-axis is separately disposed in the housing 10. The X-directional linear driving mechanism 40 is connected to a Y-directional driving mechanism, and the linear driving mechanism 40, the moving unit 41, the tilt mechanism 42, and the holder 48 are driven collectively by the Y-directional linear driving mechanism so that they move in the Y-direction.
(3) In the aforementioned embodiments, the spindle 34 and the spindle motor 32 are moved by the linear driving mechanism 30 in the Z-direction. The spindle 34 and the spindle motor 32 may, however, be fixed to the carriage 22 so that the spindle 34 and the spindle motor 32 are not moved in the Z-direction. In this case, a Z-directional linear driving mechanism is provided between the X-directional linear driving mechanism 40 and the moving unit 41, and the moving unit 41, the tilt mechanism 42, and the holder 48 are driven collectively by the Z-directional linear driving mechanism so as to move in the Z-direction.
(4) In the aforementioned embodiments, the initial ready position is located at the highest position in the housing 50 or a position higher than the uppermost hold shelf 56, but the ready position is not limited thereto. It may be located at the lowest position in the housing 50 or a position lower than the lowermost hold shelf 56. Alternatively, it may be located at the same level as the access holes for transfer 12a and 53a.

## Claims

1. A machining device (1) comprising a machining device unit (2) and a loading device (3) for loading workpieces (8) into a holder (48) disposed in a housing (10) of the machining device unit (2) through a first access hole for transfer (12a) formed in the housing (10) of the machining device unit (2), the loading device (3) comprising:
a storage stand (55) for storing a plurality of workpieces (8) in such a manner that the workpieces (8) are arranged vertically, the storage stand (55) being disposed outside the housing (10) of the machining device unit (2), the storage stand (55) having a plurality of hold shelves (56) each of which being able to store one workpiece (8), wherein said hold shelves (56) are disposed vertically in the storage stand (55) and divided into an upper group and a lower group, where the distance between the lowermost hold shelf (56) in the upper group and the uppermost hold shelf (56) in the lower group is larger than the distances between other adjacent hold shelves (56);
a transfer device (70);
an elevator (60) for carrying the transfer device (70) up and down at a side of the storage stand (55) outside the housing of the machining device unit (2); and
a housing (50) disposed adjacent to the housing (10) of the machining device unit (2), wherein the storage stand (55), the transfer device (70), and the elevator (60) are disposed in the housing (50) of the loading device (3), and a second access hole for transfer (53a) is formed in the housing (50) of the loading device (3), the second access hole for transfer (53a) being communicated with the first access hole for transfer (12a) formed in the housing (10) of the machining device unit (2), and a position of the second access hole for transfer (53a) in the housing (50) of the loading device (3) is determined between the lowermost hold shelf (56) in the upper group and the uppermost hold shelf (56) in the lower group of the storage stand (55), wherein,
the elevator (60) is configured to move the transfer device (70) to a level of a certain workpiece (8) of the plurality of workpieces (8) and the transfer device (70) is configured to pull out the workpiece (8) from the storage stand (55); and
the elevator (60) is configured to move the transfer device (70) to a level of the first and second access holes for transfer (12a, 53a) and the transfer device (70) is configured to load the workpiece (8) into the holder (48) through the first and second access holes for transfer (12a, 53a), wherein
the elevator (60) is configured to carry the transfer device (70) at a location for elevation opposite to the first access hole for transfer (12a) relative to the storage stand (55); and
the transfer device (70) is configured to pull out the workpiece (8) from the storage stand (55) to the location for elevation, and the transfer device (70) is configured to load the workpiece (8) into the holder (48) after transferring the workpiece (8) from the location for elevation to the holder (48) between the lowermost hold shelf (56) in the upper group and the uppermost hold shelf (56) in the lower group of the storage stand (55) and the first and second access holes for transfer (12a, 53a).

2. The machining device (1) according to Claim 1, **characterized in that**:
the transfer device (70) is provided with a picker (71), the picker (71) holding the workpiece (8);
a movement mechanism (72) for moving the picker (71) within a range spanning from the location for elevation to the holder (48); and
a driving device (73) for driving the movement mechanism (72).

3. The machining device (1) according to Claim 2, **characterized in that**:
a path of the picker (71) moved with the movement mechanism (72) is straight.

4. The machining device (1) according to Claim 1, wherein the loading device (3) further comprises a door (57), **characterized in that**:
the second access hole for transfer (53a) is provided so that the second access hole for transfer (53a) is closed at normal times, and
the door (57) can open inward the housing (10) of the machining device unit (2).

5. The machining device (1) according to any of Claims 1 to 4, wherein the machining device unit (2) comprises:
the housing (10) having the first access hole for transfer (12a) formed therein;
a tool (36) disposed in the housing (10);
a rotational drive device (34) for rotary driving the tool (36), the rotational drive device (34) being disposed in the housing (10);
the holder (48) for holding workpieces (8), the holder (48) being disposed in the housing (10); and
a three-dimensional displacement mechanism (20, 30, 40) for driving the tool (36) and the rotational drive device (34) so as to move, relative to the holder (48) in the housing (10) of the machining device unit (2), the tool (36) and the rotational drive device (34) in a Z-direction and X- and Y-directions, the Z-direction being parallel to a rotation shaft of the rotational drive device (34), the X- and Y-directions being each perpendicular to the Z-direction and perpendicular to each other.

## Patentansprüche

1. Bearbeitungsvorrichtung (1), umfassend eine Bearbeitungsvorrichtungseinheit (2) und eine Ladevorrichtung (3) zum Laden von Werkstücken (8) in einen in einem Gehäuse (10) der Bearbeitungsvorrichtungseinheit (2) angeordneten Halter (48) durch ein im Gehäuse (10) der Bearbeitungsvorrichtungseinheit (2) gebildetes erstes Zugangsloch zum Transfer (12a), wobei die Ladevorrichtung (3) umfasst:
einen Speicherständer (55) zum Speichern einer Vielzahl von Werkstücken (8) auf solch eine Weise, dass die Werkstücke (8) vertikal angeordnet sind, wobei der Speicherständer (55) außerhalb des Gehäuses (10) der Bearbeitungsvorrichtungseinheit (2) angeordnet ist, der Speicherständer (55) eine Vielzahl von Haltefächern (56) aufweist, von denen jedes ein Werkstück (8) speichern kann, wobei die Fächer (56) vertikal im Speicherständer (55) angeordnet und in eine obere Gruppe und eine untere Gruppe unterteilt sind, wobei der Abstand zwischen dem untersten Haltefach (56) in der oberen Gruppe und dem obersten Haltefach (56) in der unteren Gruppe größer ist als die Abstände zwischen anderen angrenzenden Haltefächern (56);
eine Transfervorrichtung (70);
einen Senkrechtförderer (60) zum Befördern der Transfervorrichtung (70) nach oben und unten an einer Seite des Speicherständers (55) außerhalb des Gehäuses der Bearbeitungsvorrichtungseinheit (2); und
ein angrenzend an das Gehäuse (10) der Bearbeitungsvorrichtungseinheit (2) angeordnetes Gehäuse (50), wobei der Speicherständer (55), die Transfervorrichtung (70) und der Senkrechtförderer (60) im Gehäuse (50) der Ladevorrichtung (3) angeordnet sind und ein zweites Zugangsloch zum Transfer (53a) im Gehäuse (50) der Ladevorrichtung (3) gebildet ist, wobei das zweite Zugangsloch zum Transfer (53a) mit dem im Gehäuse (10) der Bearbeitungsvorrichtungseinheit (2) gebildeten ersten Zugangsloch zum Transfer (12a) verbunden ist und eine Position des zweiten Zugangslochs zum Transfer (53a) im Gehäuse (50) der Ladevorrichtung (3) zwischen dem untersten Haltefach (56) in der oberen Gruppe und dem obersten Haltefach (56) in der unteren Gruppe des Speicherständers (55) bestimmt ist, wobei,
der Senkrechtförderer (60) zum Bewegen der Transfervorrichtung (70) auf eine Höhe eines bestimmten Werkstücks (8) der Vielzahl von Werkstücken (8) ausgebildet ist und die Transfervorrichtung (70) zum Herausziehen des Werkstücks (8) aus dem Speicherständer (55) ausgebildet ist; und
der Senkrechtförderer (60) zum Bewegen der Transfervorrichtung (70) auf eine Höhe von erstem und zweitem Zugangsloch zum Transfer (12a, 53a) ausgebildet ist und die Transfervorrichtung (70) zum Laden des Werkstücks (8) in den Halter (48) durch erstes und zweites Zugangsloch zum Transfer (12a, 53a) ausgebildet ist, wobei
der Senkrechtförderer (60) zum Befördern der Transfervorrichtung (70) an eine Position zur Senkrechtförderung gegenüber dem ersten Zugangsloch zum Transfer (12a) in Bezug auf den Speicherständer (55) ausgebildet ist; und
die Transfervorrichtung (70) zum Herausziehen des Werkstücks (8) aus dem Speicherständer (55) zur Position zur Senkrechtförderung ausgebildet ist und die Transfervorrichtung (70) zum Laden des Werkstücks (8) in den Halter (48) nach dem Transfer des Werkstücks (8) von der Position zur Senkrechtförderung zum Halter (48) zwischen dem untersten Haltefach (56) in der oberen Gruppe und dem obersten Haltefach (56) in der unteren Gruppe des Speicherständers (55) und erstem und zweiten Zugangsloch zum Transfer (12a, 53a) ausgebildet ist.

2. Bearbeitungsvorrichtung (1) nach Anspruch 1, **dadurch gekennzeichnet, dass:**
die Transfervorrichtung (70) ausgestattet ist mit einem Greifer (71), wobei der Greifer (71) das Werkstück (8) hält;
einem Bewegungsmechanismus (72) zum Bewegen des Greifers (71) innerhalb eines Bereichs von der Position zur Senkrechtförderung bis zum Halter (48); und
einer Antriebsvorrichtung (73) zum Antreiben des Bewegungsmechanismus (72).

3. Bearbeitungsvorrichtung (1) nach Anspruch 2, **dadurch gekennzeichnet, dass:**
ein Weg des mit dem Bewegungsmechanismus (72) bewegten Greifers (71) gerade ist.

4. Bearbeitungsvorrichtung (1) nach Anspruch 1, wobei die Ladevorrichtung (3) ferner eine Tür (57) umfasst, **dadurch gekennzeichnet, dass:**
das zweite Zugangsloch zum Transfer (53a) so angeordnet ist, dass das zweite Zugangsloch zum Transfer (53a) zu normalen Zeiten geschlossen ist, und
die Tür (57) zum Inneren des Gehäuses (10) der Bearbeitungsvorrichtungseinheit (2) öffnen kann.

5. Bearbeitungsvorrichtung (1) nach einem der Ansprüche 1 bis 4, wobei die Bearbeitungsvorrichtungseinheit (2) umfasst:
das Gehäuse (10) mit dem darin gebildeten ersten Zugangsloch zum Transfer (12a); ein im Gehäuse (10) angeordnetes Werkzeug (36);
eine Drehantriebsvorrichtung (34) zum drehenden Antreiben des Werkzeugs (36), wobei die Drehantriebsvorrichtung (34) im Gehäuse (10) angeordnet ist;
den Halter (48) zum Halten von Werkstücken (8), wobei der Halter (48) im Gehäuse (10) angeordnet ist; und
einen dreidimensionalen Verschiebungsmechanismus (20, 30, 40) zum Antreiben des Werkzeugs (36) und der Drehantriebsvorrichtung (34), um das Werkzeug (36) und die Drehantriebsvorrichtung (34) relativ zum Halter (48) im Gehäuse (10) der Bearbeitungsvorrichtungseinheit (2) in einer Z-Richtung und X- und Y-Richtung, wobei die Z-Richtung parallel zu einer Drehwelle der Drehantriebsvorrichtung (34) ist und die X- und Y-Richtung senkrecht zur Z-Richtung und senkrecht zueinander sind, zu bewegen.

## Revendications

1. Dispositif d'usinage (1) comprenant une unité de dispositif d'usinage (2) et un dispositif de chargement (3) pour charger des pièces à usiner (8) dans un support (48) disposé dans un boîtier (10) de l'unité de dispositif d'usinage (2) à travers un premier trou d'accès pour le transfert (12a) formé dans le boîtier (10) de l'unité de dispositif d'usinage (2), le dispositif de chargement (3) comprenant :
un support de stockage (55) pour stocker une pluralité de pièces (8) de telle manière que les pièces (8) sont disposées verticalement, le support de stockage (55) étant disposé à l'extérieur du logement (10) de l'unité de dispositif d'usinage (2), le support de stockage (55) ayant une pluralité d'étagères de maintien (56) dont chacune est capable de stocker une pièce (8), dans lequel lesdites étagères de maintien (56) sont disposées verticalement dans le support de stockage (55) et divisées en un groupe supérieur et un groupe inférieur, où la distance entre l'étagère de maintien la plus basse (56) dans le groupe supérieur et l'étagère de maintien la plus haute (56) dans le groupe inférieur est plus grande que les distances entre les autres étagères de maintien adjacentes (56) ;
un dispositif de transfert (70) ;
un élévateur (60) pour transporter le dispositif de transfert (70) vers le haut et vers le bas sur un côté du support de stockage (55) à l'extérieur du logement de l'unité de dispositif d'usinage (2) ; et
un boîtier (50) disposé de manière adjacente au boîtier (10) de l'unité de dispositif d'usinage (2), dans lequel le support de stockage (55), le dispositif de transfert (70) et l'élévateur (60) sont disposés dans le boîtier (50) du dispositif de chargement (3), et un second trou d'accès pour le transfert (53a) est formé dans le boîtier (50) du dispositif de chargement (3), le second trou d'accès pour le transfert (53a) étant en communication avec le premier trou d'accès pour le transfert (12a) formé dans le boîtier (10) de l'unité de dispositif d'usinage (2), et une position du second trou d'accès pour le transfert (53a) dans le boîtier (50) du dispositif de chargement (3) est déterminée entre l'étagère de maintien la plus basse (56) dans le groupe supérieur et l'étagère de maintien la plus haute (56) dans le groupe inférieur du support de stockage (55), dans lequel,
l'élévateur (60) est configuré pour déplacer le dispositif de transfert (70) jusqu'à un niveau d'une certaine pièce (8) de la pluralité de pièces (8) et le dispositif de transfert (70) est configuré pour extraire la pièce (8) du support de stockage (55) ; et
l'élévateur (60) est configuré pour déplacer le dispositif de transfert (70) à un niveau des premier et second trous d'accès pour le transfert (12a, 53a) et le dispositif de transfert (70) est configuré pour charger la pièce (8) dans le support (48) à travers les premier et second trous d'accès pour le transfert (12a, 53a), dans lequel
l'élévateur (60) est configuré pour porter le dispositif de transfert (70) à un emplacement pour l'élévation opposé au premier trou d'accès pour le transfert (12a) par rapport au support de stockage (55) ; et
le dispositif de transfert (70) est configuré pour extraire la pièce à usiner (8) du support de stockage (55) vers l'emplacement d'élévation, et le dispositif de transfert (70) est configuré pour charger la pièce à usiner (8) dans le support (48) après avoir transféré la pièce à usiner (8) de l'emplacement d'élévation au support (48) entre l'étagère de maintien la plus basse (56) dans le groupe supérieur et l'étagère de maintien la plus haute (56) dans le groupe inférieur du support de stockage (55) et les premier et second trous d'accès pour le transfert (12a, 53a).

2. Dispositif d'usinage (1) selon la revendication 1, **caractérisé en ce que** :
le dispositif de transfert (70) est pourvu d'un préhenseur (71), le préhenseur (71) maintenant la pièce (8) ;
un mécanisme de déplacement (72) pour déplacer le préleveur (71) dans une plage s'étendant de l'emplacement d'élévation au support (48) ; et
un dispositif d'entraînement (73) pour entraîner le mécanisme de déplacement (72).

3. Dispositif d'usinage (1) selon la revendication 2, **caractérisé en ce que** :
une trajectoire du préleveur (71) déplacé avec le mécanisme de déplacement (72) est rectiligne.

4. Dispositif d'usinage (1) selon la revendication 1, dans lequel le dispositif de chargement (3) comprend en outre une porte (57), **caractérisé en ce que** :
le second trou d'accès pour le transfert (53a) est prévu pour que le second trou d'accès pour le transfert (53a) soit fermé en temps normal, et
la porte (57) peut ouvrir vers l'intérieur le boîtier (10) de l'unité de dispositif d'usinage (2).

5. Dispositif d'usinage (1) selon l'une quelconque des revendications 1 à 4, dans lequel l'unité de dispositif d'usinage (2) comprend :
le boîtier (10) dans lequel est formé le premier trou d'accès pour le transfert (12a) ;
un outil (36) disposé dans le boîtier (10) ;
un dispositif d'entraînement en rotation (34) pour entraîner en rotation l'outil (36), le dispositif d'entraînement en rotation (34) étant disposé dans le boîtier (10) ;
le support (48) pour maintenir les pièces à usiner (8), le support (48) étant disposé dans le boîtier (10); et
un mécanisme de déplacement tridimensionnel (20, 30, 40) pour entraîner l'outil (36) et le dispositif d'entraînement en rotation (34) de manière à déplacer, par rapport au support (48) dans le boîtier (10) de l'unité de dispositif d'usinage (2), l'outil (36) et le dispositif d'entraînement en rotation (34) dans une direction Z et des directions X et Y, la direction Z étant parallèle à un arbre de rotation du dispositif d'entraînement en rotation (34), les directions X et Y étant chacune perpendiculaire à la direction Z et perpendiculaires l'une à l'autre.
